# EUROPEAN PATENT APPLICATION

(11) **EP 4 470 711 A1**
(43) Date of publication of application: **04.12.2024**
(21) Application number: 24173911.9
(22) Date of filing: 02.05.2024
(51) Int. Cl.: B23K 26/244

(54) **LASER SYSTEMS AND RELATED LASER SETTINGS, INCLUDING A SPECIFIC USER INTERFACE AND SAFETY FEATURES**

(30) Priority: 02.05.2023 US 202363499672 P; 01.05.2024 US 202418652217
(71) Applicant: Illinois Tool Works Inc., Glenview IL 60025 (US)
(72) Inventor: LIU, Shuang, Glenview, 60025 (US); HOLVERSON, Todd Earl, Glenview, 60025 (US); TYLER, Charles Ace, Glenview, 60025 (US); HUTCHISON, Richard Martin, Glenview, 60025 (US); MARCHAND, Andrew, Glenview, 60025 (US); CENTNER, Robert J., Glenview, 60025 (US); SCHNEIDER, Joseph C., Glenview, 60025 (US)
(74) Representative: HGF

(57) **Abstract**

Systems and methods for laser welding are disclosed. A laser welding system includes a hand held laser welding tool to direct laser power to a workpiece to generate a weld during a laser welding operation. The welding system includes a controller to regulate activation and regulation of the laser power based on user inputs, sensor inputs, and/or synergic control of a laser power source. A laser welding system is disclosed, comprising: a handheld laser welding torch (50) to direct the laser power to a workpiece via a nozzle, wherein the nozzle is configured to output a laser beam;

a user interface configured to receive an input, allowing an operator to search, select or build one or more laser welding parameters, laser welding profiles, workpiece characteristics, or filler material characteristics; and
a laser beam controller to control application of the laser beam from the handheld laser welding torch to the workpiece based on the input.

## Description

### CROSS REFERENCE TO RELATED APPLICATIONS

This application is a Non-Provisional Patent Application claiming priority to U.S. Provisional Patent Application No. 63/499,672 entitled "Laser Systems And Related Laser Settings, Including A Specific User Interface and Safety Features" filed May 2, 2023, which is herein incorporated by reference in its entirety.

### BACKGROUND

Welding is a process that has historically been a cost effective joining method. Welding is, at its core, a way of bonding two pieces of parent material. Laser welding is a welding technique used to join multiple pieces of metal through the use of a laser. The laser beam provides a concentrated heat source, enabling a precise control of the heat input and high welding speed, creating a weld with low heat input, and a small heat affected zone. In various applications, filler metal may be needed for different purposes such as filling a gap between workpieces, reinforcing the joint, overlaying a substrate surface, building up an object, or acting as a buffering medium.

Conventional laser-based welding tools can create challenges for new users, especially for manually operated laser welders. Even welders with long experience with arc-related welding systems may be unfamiliar with the peculiarities of a laser welding system, including how to achieve a quality weld bead and incorporate laser protection features. Thus, systems and/or methods that facilitate and stabilize welding from laser based welding systems with laser protection features is desirable.

### SUMMARY

This disclosure relates generally to laser welding systems, methods, and apparatuses. More particularly, this disclosure relates to manually operated laser welding systems and torches, which may employ a continuously fed electrode wire for use in laser welding processes, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 illustrates an example laser type welding system, in accordance with aspects of this disclosure.
FIGS. 2A to 2E illustrate example graphical user interfaces for hand held laser welding tools, in accordance with aspects of this disclosure.

The figures are not necessarily to scale. Wherever appropriate, similar or identical reference numerals are used to refer to similar or identical components.

### DETAILED DESCRIPTION

Disclosed example systems and methods for laser welding are provided. In particular, disclosed example laser welding systems include a manually operated laser welding torch to direct laser power to a workpiece to generate a puddle during a laser welding operation. The welding system includes a controller to regulate activation and regulation of the laser power based on user inputs, sensor inputs, and/or synergic control of a laser power source.

As used herein, the word "exemplary" means serving as an example, instance, or illustration. The examples described herein are not limiting, but rather are exemplary only. It should be understood that the described examples are not necessarily to be construed as preferred or advantageous over other examples. Moreover, the term "examples" does not require that all examples of the disclosure include the discussed feature, advantage, or mode of operation.

As used herein, a wire-fed welding-type system refers to a system capable of performing welding (e.g., gas metal arc welding (GMAW), gas tungsten arc welding (GTAW), etc.), brazing, cladding, hardfacing, and/or other processes, in which a filler metal is provided by a wire that is fed to a location on the workpiece, such as an arc, a laser beam, or weld puddle.

As used herein, the term "welding-type operation" includes a welding operation employing a laser welding systems using laser energy, operable to fuse, bind, and/or cut one or more materials and/or layers of materials.

As used herein, a welding-type power source refers to any device capable of, when power is applied thereto, supplying welding, cladding, plasma cutting, induction heating, laser (including laser welding and laser cladding), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

As used herein, laser beam scanning, laser beam scanning profile, laser scanning profile, or scanning profile, and/or wobble refers to one or more of control of the shape (e.g., common geometric shapes, a rectangle, a triangle, a loop, a circle, a zig-zag, V-shape, a U-shape, a figure-8, etc.), size (e.g., width and/or length), power distribution (e.g., bell curve, ramping up or down, favor one side over the other or center), scanning speed (e.g., over entire scan and/or over discrete portions of the scan), and/or pulse frequency (e.g., over entire scan and/or over discrete portions of the scan) of the laser power on the workpiece and/or the filler material, and any combination thereof.

For the purpose of promoting an understanding of the principles of the claimed technology and presenting its currently understood best mode of operation, reference will be now made to the examples illustrated in the drawings, and specific language will be used to describe the same. It will nevertheless be understood that no limitation of the scope of the claimed technology is thereby intended, with such alterations and further modifications in the illustrated device and such further applications of the principles of the claimed technology as illustrated therein being contemplated as would typically occur to one skilled in the art to which the claimed technology relates.

In disclosed examples, a laser welding system includes a laser source to generate a laser to perform a welding operation; a handheld laser welding torch to direct the laser power to a workpiece via a nozzle, wherein the nozzle is configured to output a laser beam; and a laser beam controller to control application of the laser beam from the handheld laser welding torch to the workpiece in accordance with one or more laser welding profiles, each of the one or more laser welding profiles corresponding to one or more characteristics of the workpiece and the handheld laser welding torch.

In some examples, the one or more laser welding profiles includes: a first laser profile having a first power level, a first pulse frequency or a first wire feed speed to provide a desired weld bead for a first welding operation; and a second laser profile having a second power level, a second pulse frequency or a second wire feed speed to provide a desired weld bead for a second welding operation, wherein the first power level, the first pulse frequency or the first wire feed speed are different from the second power level, the second pulse frequency or the second wire feed speed.

In examples, the laser controller is further configured to change the first power level or the first pulse frequency automatically in response to a change in the first wire feed speed.

In examples, the laser controller is configured to transition between the first and second laser profiles based in response to an input from an operator.

In examples, the laser controller is configured to transition between the first and second laser profiles in response to an input from corresponding to a sensor measurement.

In some examples, the welding operations corresponds to a joining or cutting operation type, a type of weld or joint, a joint orientation, a type of filler material, or a type of material to be welded.

In some examples, the laser welding system further includes a user interface to receive one or more inputs corresponding to a desired weld or laser welding profile, the user interface configured to set or adjust one or more laser parameters of the laser welding system to control the welding operation.

In examples, the one or more laser parameters include one or more of a power output, a power distribution, a pattern of laser scanning across the workpiece, a speed of laser scanning in one or more directions, or a power pulse frequency.

In examples, the one or more laser parameters correspond to laser beam scanning, laser beam scanning profile, laser scanning profile, or scanning profile, corresponds to a shape of the laser scan on the workpiece, a size of the laser scan on the workpiece, power distribution of the laser scan on the workpiece, a scanning speed of the laser scan on the workpiece, or a pulse frequency of the laser scan on the workpiece or a filler material.

In some examples, the one or more characteristics includes one or more of a type of material to be welded, a type of material used as a filler, a presence of a filler material, arrangement of the filler material, a size of workpiece, or an arrangement of two or more workpieces being welded.

In some disclosed examples, a laser welding system includes a handheld laser welding torch to direct the laser power to a workpiece via a nozzle, wherein the nozzle is configured to output a laser beam; a user interface configured to receive an input, allowing an operator to search, select or build one or more laser welding parameters, laser welding profiles, workpiece characteristics, or filler material characteristics; and a laser beam controller to control application of the laser beam from the handheld laser welding torch to the workpiece based on the input.

In some examples, the one or more laser welding parameters includes a power output, a power distribution, a pattern of laser scanning across the object, a speed of laser scanning, power pulse frequency, or power pulse duty cycle.

In some examples, the workpiece or filler material characteristics include material type, thickness, size, or shape.

In some examples, the user interface is mounted on the handheld welding torch.

In some examples, the user interface includes one or more of a switch, a knob, a keyboard, a scroll wheel, a display, or touchscreen.

In examples, the display or touchscreen presents a graphic of one or more welding operation configurations, the graphic configured to be changed in response to the input, the graphic to represent one or more of a type or arrangement of the workpiece, the laser power characteristics, or the desired weld.

In examples, the laser controller is further configured to control the display or touchscreen to display a visual representation of the weld or the workpiece or desired changes to the weld or the workpiece.

In examples, the laser controller is further configured to receive inputs to the weld or the workpiece from the user interface, the inputs corresponding to changes based on changes to the visual representation on the user interface; adjust the one or more laser welding parameters, the laser welding profiles, the workpiece characteristics, or the filler material characteristics based on the inputs; and control application of the laser beam from the handheld laser welding torch to the workpiece based on the adjustments.

In some examples, the input to the user interface includes dragging, highlighting, or encircling one or more displayed feature within the representation.

In some examples, the user interface is configured to receive the input corresponding to a selection for a first laser welding profile configured for a first weld, and, following completion of the first weld, select a second laser welding profile for a second weld.

In some examples, the size of the laser scan includes a width or length of the laser scan across the workpiece

In some examples, a power distribution of the scanned laser beam includes one or more of a bell curve, a ramping up or down, offsetting a dwell time of the laser scan on one side over another side or a center line associated with a weld bead or direction of travel.

In some examples, the scanning speed of the laser beam includes a speed of an entire laser scan or regulation of scanning speed over discrete portions of the laser scan over the workpiece or the filler material.

In some examples, pulse frequency of the scanned laser beam includes the pulse frequency of an entire laser scan, or regulation of the pulse frequency over discrete portions of the laser scan over the workpiece or the filler material.

In some examples, the shape of the scanned laser beam pattern includes one or more of a rectangle, a triangle, a loop, a circle, a zig-zag, V-shape, a U-shape, a figure-8, an ellipse, a zigzag, a transverse reciprocating line, a crescent, a triangle, a square, a rectangle, a non-linear pattern, an asymmetrical pattern, a pause, or any combination thereof.

In some examples, the laser controller is configured to control a graphic of a user interface to display a window listing a plurality of laser welding parameter values.

In some examples, the disclosed laser welding control can be implemented in a robotic welding system. The robotic laser welding system may include one or more of a laser source to generate laser power to perform a welding operation, a handheld laser welding torch to direct the laser power to a workpiece; and a robotic arm to support the handheld laser welding torch. A laser controller can be configured to receive a first input from a user corresponding to position or movements of the collaborative robot, receive a second input corresponding to a welding process, and control generation of the laser power from the laser source and the positions or the movements of the robotic arm based on the first and second inputs.

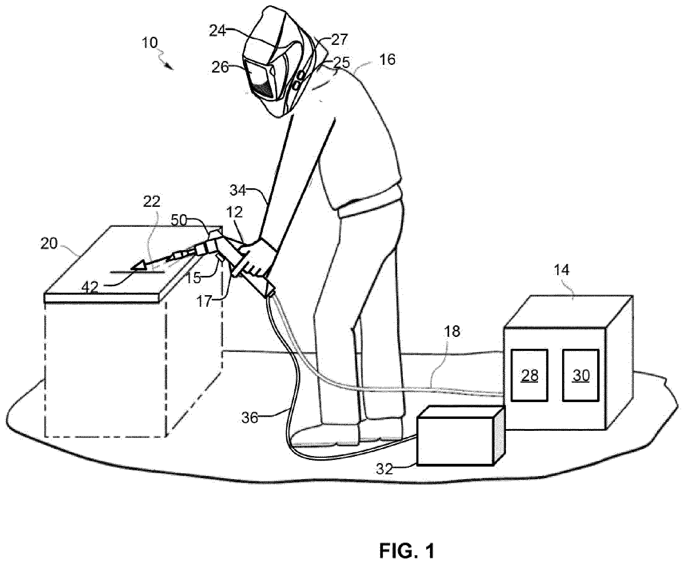

FIG. 1 is a schematic diagram of an example laser welding system 10. The example laser welding system 10 of FIG. 1 includes a laser welding power supply 14, a laser power source 28, a laser controller 30, and a wire feeder 32. A laser welding torch 12 is connected to the power supply 14 via power cable 18, and receives wire 36 from the wire feeder 32.

The laser source 28 generates welding-type laser power 42 (e.g., directed light energy) based on input power received from the power supply 14. The laser source 28 may be a light emitting a CO₂ laser, Nd:YAG laser, diode-type laser, fiber laser, disk laser or any other type of laser generator. As used herein, welding-type lasing power refers to laser power having wavelength(s) that are suitable for delivering energy to metal for welding, cutting, and/or cladding.

An operator 16 can wear one or more of a wearable 34 (such as a glove, a smartwatch, etc.) and/or a helmet 24. In some examples, the helmet 24 includes a screen 26, which may be configured to automatically dim when exposed to intense light, may be a filter for one or more wavelengths, and/or may be connected to another part of the system (e.g., controller 30). This allows the screen 26 to present information to the operator 16 to inform the welding process.

In some examples, a helmet can include an auto-darkening filter (ADF). The filter may block and/or respond to specific wavelengths associated with laser welding, for instance, to darken the view screen. The filtering feature can also be applied to goggles and/or glasses.

In some examples, within the helmet, goggles, and/or glasses, a screen can be within view of the user, providing the view of a camera. This can be limited to the view from the camera, or may provide an augmented reality (AR) and/or virtual reality (VR) image.

In some examples, the helmet can include one or more sensors 25. One or more control and/or network circuits 27 can be included to communicate with the laser controller, the wire feeder, and/or the torch 12. Further, the torch can include one or more sensors 50 and/or control circuits 15 to communicate with the laser controller, the wire feeder, and/or the helmet 24. The sensors can be used to measure one or more conditions at the weld and process the measured data to implement changes in the system and/or activate an alert. In some examples, the data is transmitted as signals to a remote processor (e.g., in the laser controller) to inform changes to the system.

The torch 12 focuses the laser power 42 at a joint or weld 22 on a workpiece 20. The laser power 42 heats the workpiece 20 to generate a puddle during welding operations. The wire feeder 32 feeds the wire 36 (e.g., filler wire, cladding material, metal additive) to the puddle generated by the laser power 42. The wire 36 melts into the puddle in the weld 22. The wire 36 may be fed from a wire supply, such as a wire reel or wire supply drum, and may be conveyed through a cable or other suitable conduit.

During a welding process, the laser controller 30 controls a focal point of the laser beam to wobble in multiple axes as applied to the workpiece 20. By moving the focal point in multiple directions, the laser can induce one or more beneficial effects in the weld. Examples of such beneficial effects that can be induced in the lateral direction(s) include agitating or stirring of the puddle laterally (including in patterns) to improve filler mixing, creating a heat gradient in the puddle in at least a partially lateral direction to induce movement and improve puddle wetting, and/or controlling the heating and/or cooling rates of the puddle in at least a partially lateral direction by controlling where heat is concentrated.

In some examples, movement of the focal point of the laser beam is controlled such that side-to-side motion is variable, random, and/or has multiple changing directions, angles, and/or lengths. For instance, side-to-side movement of the focal point may promote gap filling, wetting at the toes of a workpiece, etc., and may be set to a high wobble frequency (e.g., greater than 100 wobbles/movements per second). An additional, possibly independently controlled forward-backward motion at a lower wobble frequency could be used to result in a substantially rippled appearance, similar to a traditional ripple look of tungsten inert gas (TIG) welds, and/or other desirable characteristics.

The laser beam 42 can be controlled in any desired pattern, which may include, but is not limited to, a pattern with one or more straight lines and/or one or more curves. In some embodiments, the desired pattern may include a pause or break in the pattern, such as a time interval in which the focal point does not move. The desired pattern may include a circle, an ellipse, a zigzag, a figure 8, a transverse reciprocating line, a crescent, a triangle, a square, a rectangle, a non-linear pattern, an asymmetrical pattern, a pause, or any combination thereof. As may be appreciated, a pattern or a combination of patterns may be used and optimized for particular welds and/or welding positions. The movement of the focal point and the relative movement between the workpiece 20 and the laser torch 12 causes the focal point to trace a superimposed pattern over the workpiece 20. The example pattern may be traced by the laser beam 42 to agitate the puddle.

### Laser Welding Settings

In disclosed examples, application of the laser power during welding is regulated to provide a desired result. For instance, based on one or more characteristics of the object being welded, a user and/or laser welding controller (e.g., laser controller 30) can set and/or adjust one or more laser parameters of the laser application to control the welding operation.

In some examples, the one or more characteristics include a type of material to be welded, a type of material used as a filler, a presence, lack and/or arrangement of filler, a size of the material to be welded, and/or an arrangement of pieces being welded, as a list of non-limiting examples.

In some examples, the one or more laser parameters include a power output, a power distribution, a pattern of laser scanning across the object, a speed of laser scanning, and/or power pulse frequency, as a list of non-limiting examples.

The desired finished weld may additionally or alternatively factor into laser parameter settings. For instance, whether a deep weld or a more shallow weld is desired may control the laser beam scanning, laser beam scanning profile, laser scanning profile, or scanning profile, and/or wobble refers to one or more of control of the shape (e.g., common geometric shapes, a rectangle, a triangle, a loop, a circle, a zig-zag, V-shape, a U-shape, a figure-8, etc.), size (e.g., width and/or length), power distribution (e.g., bell curve, ramping up or down, favor one side over the other or center), scanning speed (e.g., over entire scan and/or over discrete portions of the scan), and/or pulse frequency (e.g., over entire scan and/or over discrete portions of the scan) of the laser power on the workpiece and/or the filler material, and any combination thereof..

In disclosed examples, control of the laser scanning, which correlates to the laser power applied to the weld, can be adjusted for particular characteristics. A thin gauge material can be welded with or without a filler wire. If no filler wire is employed (e.g., as multiple overlapping plates are being welded, such as a lap weld), laser power can be applied at higher power at edges of the overlap. In some examples, the laser scans across a centerline corresponding to the weld (e.g., a center of the overlap) and/or the direction of travel, such that the center is subject to laser power at a greater frequency than the edges. Thus, one example provides for a higher power at one or more edges, and relatively less power as the laser scans the center. This outcome can result from a change in pulse rate (e.g., at the edges versus the center), a speed with which the laser scans the weld (e.g., lateral and/or forward/backward movement at a faster rate in the center and lingering at the edges), and/or changes in the pattern of laser application (e.g., a U-shape, an H-shape, a figure-8, etc.), as a list of non-limiting examples. An example laser beam profile may resemble a bell curve, with an apex of the curve crossing the center of the weld.

In some examples, the laser welding tool is configured to output a laser beam(s) in accordance with a given profile for a given welding operation. For instance, a first laser profile can be associated with a first frequency of high and low pulses and/or a first wire feed speed, to provide a desired weld bead output for a first welding operation. A second laser profile can be associated with a second frequency of high and low pulses and/or a second wire feed speed, to provide a desired weld bead output for a second welding operation. The system can automatically transition between first and second laser profiles based on one or more sensor measurements, and/or in response to an input from the operator. Example laser welding operations can correspond to joining or cutting operations, a type of weld or joint, joint orientation, and/or a type of material, as a list of non-limiting examples. Although referenced as discrete values, any weld profile value (e.g., frequency, pulse energy, wire feed speed, etc.) can be adjusted dynamically and/or based on a user input.

The above laser parameter control techniques can be applied to a weld without a filler material (e.g., adding a welding wire). For instance, the laser power can be applied at low power or wattage, such that the laser power penetrates the top plate yet does not penetrate through the bottom plate (of a lap weld), yet the laser wobble is controlled to heat the material(s) at edges/sides of the overlap. The laser power may or may not be applied with greater power/time/pulse frequency at the edges.

In examples where two materials being welded have different characteristics, application of the laser power can be controlled to apply a first laser power or scan on the first material and a second laser power or scan on the second material. For instance, when the first material is thicker than the second material, the laser power can be greater at the edge of the weld at the first material and/or overlapping portion, whereas the laser power can be reduced at the edge of the weld at the second material. Suitable laser parameters can include those described herein.

In some such examples, the amount of power applied to the first material may be greater than 50% (e.g., up to 99%), whereas the amount of power applied to the second mater may be less than 50% (e.g., down to 1%).

In some examples, the when and where the laser power is applied to the weld can control the quality of the weld. For instance, the laser can be focused on the filler material first, then shifted to the workpiece. As the filler material may have a different melting point than the workpiece, the laser power applied to the filler material may have lower power (e.g., lower pulse rate, faster scanning speed, etc.) than the workpiece. Or the laser scan may apply additional power to the wire, such that the wire is melted or nearly melted as it makes contact with the already molten puddle.

In some examples, the laser power may be applied to the workpiece first to heat the workpiece prior to contact from the filler material. The workpiece may reach a temperature at which the filler material melts, but may be below the melting point of the workpiece itself. Once applied to the workpiece, additional laser power may be added to the resulting weld bead. The laser can be scanned over both the workpiece and the filler material (e.g., weld bead) to continue fusing of the workpieces (and/or buildup of an additive manufactured object via the filler material). Or the laser scan may favor the wire, such that the wire is melted or nearly melted as it hits the already molten puddle.

### User Interfaces and Automatic Control of Laser Welding Systems

In some examples, the welding system includes one or more features allowing an operator to input, search and/or select (e.g., via a user interface) one or more laser welding parameters (e.g., a power output, a power distribution, a pattern of laser scanning across the object, a speed of laser scanning, power pulse frequency, etc.), laser welding profiles (e.g., from a stored and/or remotely accessible list), and/or input or select characteristics of a workpiece and/or filler material.

In some disclosed examples, the user interface may provide the user with one or more input/output devices, including one or more of a switch, a knob, a keyboard, and/or touchscreen, as a list of non-limiting examples.

In an example, a user is enabled to setup a laser welding operations by being presented with a graphic of one or more welding operation configurations. The graphic can be changed by the I/O devices to reflect the type and/or arrangement of the workpiece(s), the laser power characteristics, and/or the desired weld, as a list of non-limiting examples.

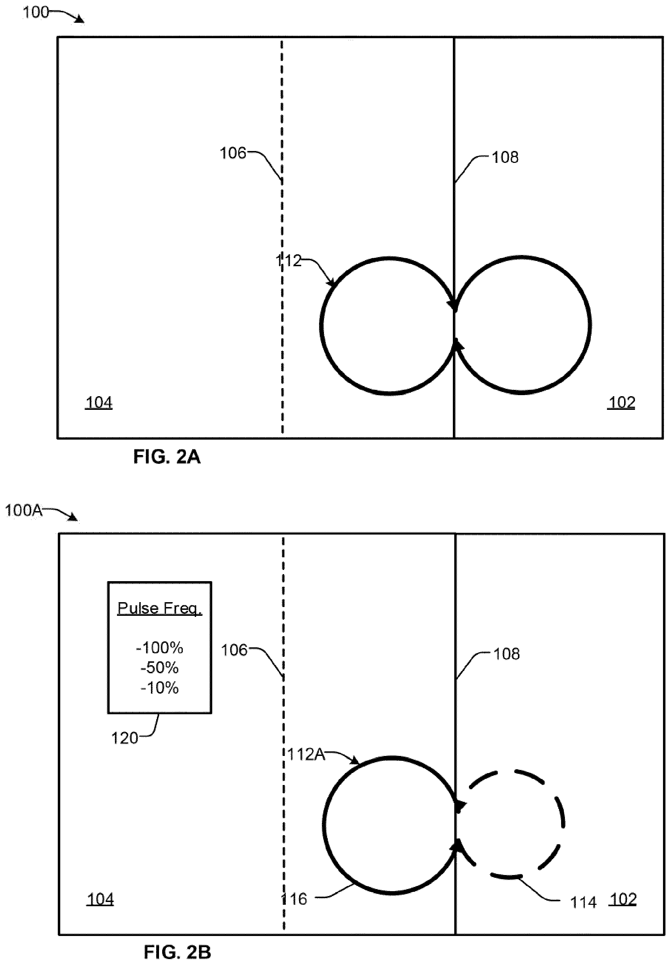

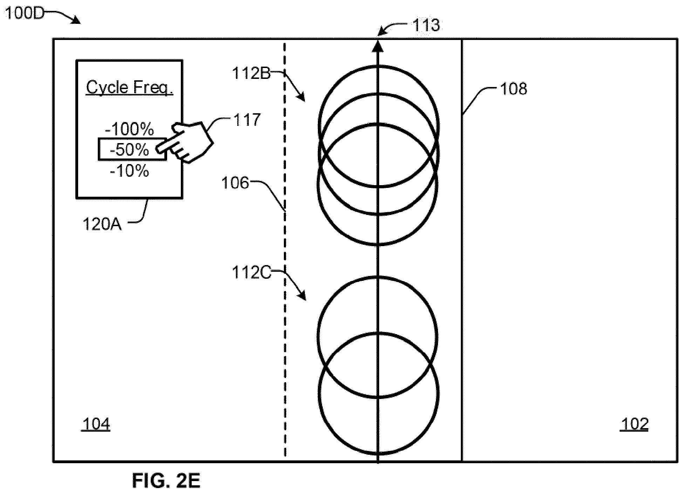

As shown in FIG. 2A, a graphic 100 is presented of a lap weld, with a first workpiece 102 arranged blow a second workpiece 104. A first edge 106 represents the edge of the lap joint at the first workpiece 102, and a second edge 108 represents the edge at the second workpiece 104. In the example of FIG. 2A, line 112 represents a scanning pattern for the laser beam.

Features within the graphic 100 can be adjusted via the I/O devices to create a welding profile, resulting in a desired welding operation configuration. For instance, a relative location of the workpiece(s) can be changed, such that the position of the edges and/or centerline can be adjusted. Moreover, the laser application can be changed via the graphic 100. For instance, the line 112 representing the scanning pattern can be adjusted, such that the pattern itself is changed, that location on the workpiece(s) is changed, and/or the power application is changed. FIG. 2B illustrates a modified graphic 100A, representing a line 112A with an adjusted arrangement relative to the edge 108, such that the figure-8 has a larger loop 116 on the left side (e.g., over the first workpiece 102, which may be thicker than second workpiece 104). Moreover, loop 114 on the right side has been modified to include a pulse frequency, illustrated graphically by a dashed line.

Detail can be included by use of the touchscreen in conjunction with a numerical list, such that a feature in the graphic can be selected (e.g., highlighted, encircled, etc.), with one or more adjustable features presented in a pop-up window. For instance, a user can encircle loop 114, which causes a pop-up window 120 to appear, listing a number of relevant laser welding parameters (e.g., power level, duty cycle, etc.). The user can select a value from the pop-up window 120.

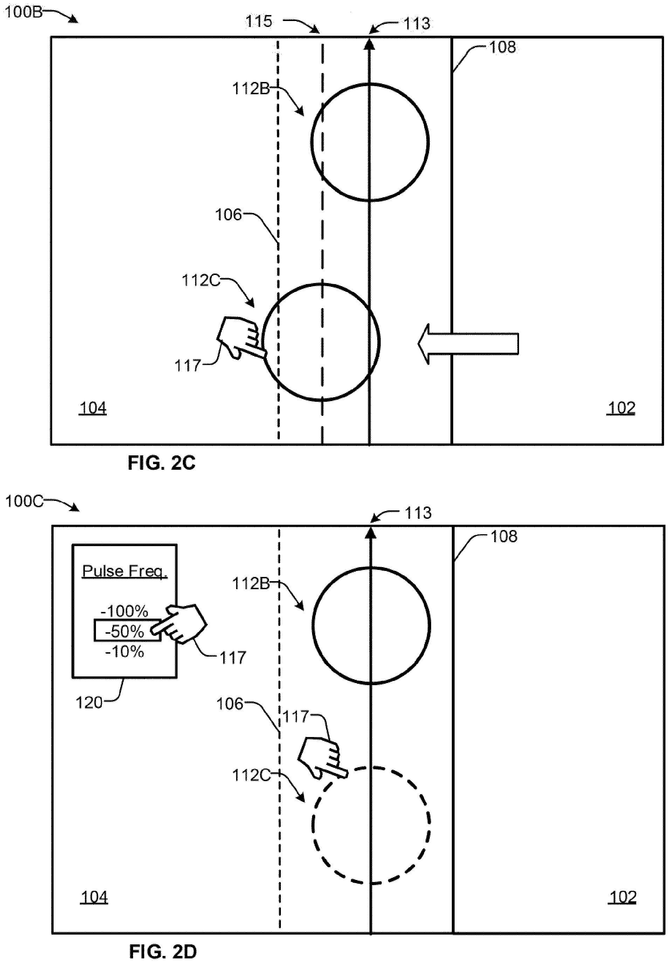

FIG. 2C illustrates another modified graphic 100B, displaying an initial line 112B representing the scanning pattern, and a modified line 112C representing an adjusted loop. In this example, the modified line 112C has been selected by a user input (represented by icon 117) and dragged into a second position (e.g., from center line 113 to line 115 closer to the edge 106).

FIG. 2D illustrates yet another modified graphic 100C, representing an initial line 112B representing the scanning pattern. Here, icon 117 has selected line 112C for modification. In the pop-up window 120, the user employs icon 117 to select a pulse frequency of 50%, reflected in line 112C.

FIG. 2D illustrates yet another modified graphic 100C, displaying an initial set of lines 112B representing a scanning pattern with a first cycle frequency. As shown, the icon 117 selects a 50% cycle frequency from pop-up window 120, resulting in and a modified pattern of lines 112C with the selected 50% cycle frequency.

Such changes can be implemented by interacting with the graphic itself (e.g., via a I/O device such as a touchscreen), and/or by accessing a list of welding parameters and/or workpiece characteristics, and modifying corresponding the values.

In some examples, the user can set and/or configure multiple such laser welding profiles. The laser welding profiles can be made accessible in a variety of ways: by storing in a list of welding profiles, transmitting the welding profiles to another device, and/or maintaining access to the one or more welding profiles during a laser welding operation, as a list of non-limiting examples. For instance, the user interface may present the welding profiles for selection, such as by a corresponding switch, button, foot pedal, and/or via a touchscreen display.

In this manner, during an example hand held laser welding operation, the user may select a first laser welding profile configured for a first weld (e.g., a first type of material and/or a first joint), and, following completion of the first weld, select a second laser welding profile for a second weld (e.g., a second type of material and/or a second joint). This allows the user to preselect multiple laser welding profiles in advance of the welding operation, while having access to the multiple laser welding profiles as the welding operation progresses.

In some examples, the laser welding system can automatically transition between first and second laser welding profiles based on power output readings, one or more sensor measurements, and/or in response to an input from the operator. Example laser welding operations can correspond to joining or cutting operations, a type of weld or joint, and/or a type of material, as a list of non-limiting examples. Although referenced as discrete values, any weld profile value

(e.g., frequency, pulse energy, wire feed speed, scan shape, pulsed and/or reciprocating wire feed, etc.) can be adjusted dynamically and/or based on a user input.

### Synergic Control of Laser Welding Systems

In some additional or alternative examples, for any adjustable laser welding parameter, the laser welding system can be configured to automatically adjust one or more of the other laser welding parameters in accordance with one or more (e.g., an "autoset" feature).

In disclosed examples, the autoset feature is configured to receive one or more laser welding parameters and/or workpiece characteristics and adjust other laser welding parameters accordingly, such as beam width, laser power output, workpiece dimensions, material type, wire feed speed, and/or travel speed, as a list of non-limiting examples. The association of which selected laser parameters and/or workpiece characteristics to various laser welding parameters can be stored in a list of laser welding parameters and/or workpiece characteristics, received via an operator input, and/or calculated or otherwise determined by use of one or more algorithms, models, and/or artificial intelligence.

For some handheld welding systems, wire feed speed can be indicative of travel speed. The wire tends to meet the workpiece and/or the weld bead with a force corresponding to the drive of the wire feeder. Thus, travel speed and wire feed speed tend to display a proportional relationship. In this manner, changes to the wire feed speed tend to alter a number of other laser welding parameters, such as power. In accordance with synergic control, a change to the wire feed speed can cause an automatic modification to one or more laser welding parameters to ensure output of a desired weld. The inverse can also be applicable, such that changes to one or more laser welding parameters can cause a change to the wire feed speed (and, by extension, travel speed).

In some examples, the laser welding torch is configured to output a laser beam(s) in accordance with a given profile for a given welding operation. For instance, a first laser profile can be associated with a first frequency of high and low pulses and/or a first wire feed speed, to provide a desired weld bead output for a first welding operation. A second laser profile can be associated with a second frequency of high and low pulses and/or a second wire feed speed, to provide a desired weld bead output for a second welding operation.

In some example systems, one or more welding parameters can be regulated by synergic control, such that two or more welding parameters are adjusted based on a common or related input. For instance, a change in laser power may impact wire feed speed, as changes in wire feed speed may impact laser power. In some examples, the pulse frequency, power level, travel speed, etc., could be regulated via synergic control. The synergically controlled parameters may be set at the power supply and/or dynamically controlled during the welding operation by the operator, such as by using an analog trigger 17, foot pedal, or other adjustable-input device to receive operator input. Based on the input (e.g., an input representative of power output), the laser welding power supply may change the synergically controlled parameters in real-time to respond to the operator input and improve operator control over the result of the weld.

In some examples, a sensor may monitor one or more welding parameters or characteristics of the weld (including shape, size, orientation, heat, color, etc.) and cause the laser controller to automatically make adjustments to one or more of the welding parameters. Under synergic control, an adjustment to one welding parameter (e.g., wire feed speed) based on sensor data may cause an automatic adjustment to another welding parameter (e.g., laser power).

In some examples, one or more laser welding parameters can be locked (e.g., unable to be changed) or limited (e.g., any changes are limited to a predetermined range). For instance, a bank of laser welding power supplies can have one or more welding parameters set or calibrated by a supervisor, such that each power supply has a consistent functionality regardless of operator.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A laser welding system, comprising:
   a laser source to generate a laser to perform a welding operation;
   a handheld laser welding torch to direct the laser power to a workpiece via a nozzle, wherein the nozzle is configured to output a laser beam; and
   a laser beam controller to control application of the laser beam from the handheld laser welding torch to the workpiece in accordance with one or more laser welding profiles, each of the one or more laser welding profiles corresponding to one or more characteristics of the workpiece and the handheld laser welding torch.
Clause 2. The laser welding system of clause 1, wherein the one or more laser welding profiles includes:
   a first laser profile having a first power level, a first pulse frequency or a first wire feed speed to provide a desired weld bead for a first welding operation; and
   a second laser profile having a second power level, a second pulse frequency or a second wire feed speed to provide a desired weld bead for a second welding operation,
   wherein the first power level, the first pulse frequency or the first wire feed speed are different from the second power level, the second pulse frequency or the second wire feed speed.
Clause 3. The laser welding system of clause 2, wherein the laser controller is further configured to change the first power level or the first pulse frequency automatically in response to a change in the first wire feed speed.
Clause 4. The laser welding system of clause 2, wherein the laser controller is configured to transition between the first and second laser profiles based in response to an input from an operator.
Clause 5. The laser welding system of clause 2, wherein the laser controller is configured to transition between the first and second laser profiles in response to an input from corresponding to a sensor measurement.
Clause 6. The laser welding system of clause 1, wherein the welding operations corresponds to a joining or cutting operation type, a type of weld or joint, a joint orientation, a type of filler material, or a type of material to be welded.
Clause 7. The laser welding system of clause 1, further comprising a user interface to receive one or more inputs corresponding to a desired weld or laser welding profile, the user interface configured to set or adjust one or more laser parameters of the laser welding system to control the welding operation.
Clause 8. The laser welding system of clause 7, wherein the one or more laser parameters include one or more of a power output, a power distribution, a pattern of laser scanning across the workpiece, a speed of laser scanning in one or more directions, or a power pulse frequency.
Clause 9. The laser welding system of clause 7, wherein the one or more laser parameters correspond to laser beam scanning, laser beam scanning profile, laser scanning profile, or scanning profile, corresponds to a shape of the laser scan on the workpiece, a size of the laser scan on the workpiece, power distribution of the laser scan on the workpiece, a scanning speed of the laser scan on the workpiece, or a pulse frequency of the laser scan on the workpiece or a filler material.
Clause 10. The laser welding system of clause 1, wherein the one or more characteristics includes one or more of a type of material to be welded, a type of material used as a filler, a presence of a filler material, arrangement of the filler material, a size of workpiece, or an arrangement of two or more workpieces being welded.
Clause 11. A laser welding system, comprising:
   a handheld laser welding torch to direct the laser power to a workpiece via a nozzle, wherein the nozzle is configured to output a laser beam;
   a user interface configured to receive an input, allowing an operator to search, select or build one or more laser welding parameters, laser welding profiles, workpiece characteristics, or filler material characteristics; and
   a laser beam controller to control application of the laser beam from the handheld laser welding torch to the workpiece based on the input.
Clause 12. The laser welding system of clause 11, wherein the one or more laser welding parameters includes a power output, a power distribution, a pattern of laser scanning across the object, a speed of laser scanning, power pulse frequency, or power pulse duty cycle.
Clause 13. The laser welding system of clause 11, wherein the workpiece or filler material characteristics include material type, thickness, size, or shape.
Clause 14. The laser welding system of clause 11, wherein the user interface is mounted on the handheld welding torch.
Clause 15. The laser welding system of clause 11, wherein the user interface includes one or more of a switch, a knob, a keyboard, a scroll wheel, a display, or touchscreen.
Clause 16. The laser welding system of clause 15, wherein the display or touchscreen presents a graphic of one or more welding operation configurations, the graphic configured to be changed in response to the input, the graphic to represent one or more of a type or arrangement of the workpiece, the laser power characteristics, or the desired weld.
Clause 17. The laser welding system of clause 16, wherein the laser controller is further configured to control the display or touchscreen to display a visual representation of the weld or the workpiece or desired changes to the weld or the workpiece.
Clause 18. The laser welding system of clause 16, wherein the laser controller is further configured to;
   receive inputs to the weld or the workpiece from the user interface, the inputs corresponding to changes based on changes to the visual representation on the user interface;
   adjust the one or more laser welding parameters, the laser welding profiles, the workpiece characteristics, or the filler material characteristics based on the inputs; and
   control application of the laser beam from the handheld laser welding torch to the workpiece based on the adjustments.
Clause 19. The laser welding system of clause 11, wherein the input to the user interface includes dragging, highlighting, or encircling one or more displayed feature within the representation.
Clause 20. The laser welding system of clause 11, wherein the user interface is further configured to:
   receive the input corresponding to a selection for a first laser welding profile configured for a first weld, and,
   following completion of the first weld, select a second laser welding profile for a second weld.

## Claims

1. A laser welding system, comprising:
a laser source to generate a laser to perform a welding operation;
a handheld laser welding torch to direct the laser power to a workpiece via a nozzle, wherein the nozzle is configured to output a laser beam; and
a laser beam controller to control application of the laser beam from the handheld laser welding torch to the workpiece in accordance with one or more laser welding profiles, each of the one or more laser welding profiles corresponding to one or more characteristics of the workpiece and the handheld laser welding torch.

2. The laser welding system of claim 1, wherein the one or more laser welding profiles includes:
a first laser profile having a first power level, a first pulse frequency or a first wire feed speed to provide a desired weld bead for a first welding operation; and
a second laser profile having a second power level, a second pulse frequency or a second wire feed speed to provide a desired weld bead for a second welding operation,
wherein the first power level, the first pulse frequency or the first wire feed speed are different from the second power level, the second pulse frequency or the second wire feed speed.

3. The laser welding system of claim 2, wherein the laser controller is further configured to change the first power level or the first pulse frequency automatically in response to a change in the first wire feed speed.

4. The laser welding system of claim 2, wherein the laser controller is configured to transition between the first and second laser profiles based in response to an input from an operator, or wherein the laser controller is configured to transition between the first and second laser profiles in response to an input from corresponding to a sensor measurement.

5. The laser welding system of claim 1, wherein the welding operations corresponds to a joining or cutting operation type, a type of weld or joint, a joint orientation, a type of filler material, or a type of material to be welded.

6. The laser welding system of claim 1, further comprising a user interface to receive one or more inputs corresponding to a desired weld or laser welding profile, the user interface configured to set or adjust one or more laser parameters of the laser welding system to control the welding operation.

7. The laser welding system of claim 6, wherein the one or more laser parameters include one or more of a power output, a power distribution, a pattern of laser scanning across the workpiece, a speed of laser scanning in one or more directions, or a power pulse frequency, or wherein the one or more laser parameters correspond to laser beam scanning, laser beam scanning profile, laser scanning profile, or scanning profile, corresponds to a shape of the laser scan on the workpiece, a size of the laser scan on the workpiece, power distribution of the laser scan on the workpiece, a scanning speed of the laser scan on the workpiece, or a pulse frequency of the laser scan on the workpiece or a filler material.

8. The laser welding system of claim 1, wherein the one or more characteristics includes one or more of a type of material to be welded, a type of material used as a filler, a presence of a filler material, arrangement of the filler material, a size of workpiece, or an arrangement of two or more workpieces being welded.

9. A laser welding system, comprising:
a handheld laser welding torch to direct the laser power to a workpiece via a nozzle, wherein the nozzle is configured to output a laser beam;
a user interface configured to receive an input, allowing an operator to search, select or build one or more laser welding parameters, laser welding profiles, workpiece characteristics, or filler material characteristics; and
a laser beam controller to control application of the laser beam from the handheld laser welding torch to the workpiece based on the input.

10. The laser welding system of claim 9, wherein the one or more laser welding parameters includes a power output, a power distribution, a pattern of laser scanning across the object, a speed of laser scanning, power pulse frequency, or power pulse duty cycle.

11. The laser welding system of claim 9, wherein the workpiece or filler material characteristics include material type, thickness, size, or shape, or wherein the user interface is mounted on the handheld welding torch.

12. The laser welding system of claim 9, wherein the user interface includes one or more of a switch, a knob, a keyboard, a scroll wheel, a display, or touchscreen.

13. The laser welding system of claim 12, wherein the display or touchscreen presents a graphic of one or more welding operation configurations, the graphic configured to be changed in response to the input, the graphic to represent one or more of a type or arrangement of the workpiece, the laser power characteristics, or the desired weld.

14. The laser welding system of claim 13, wherein the laser controller is further configured to control the display or touchscreen to display a visual representation of the weld or the workpiece or desired changes to the weld or the workpiece, or wherein the laser controller is further configured to;
receive inputs to the weld or the workpiece from the user interface, the inputs corresponding to changes based on changes to the visual representation on the user interface;
adjust the one or more laser welding parameters, the laser welding profiles, the workpiece characteristics, or the filler material characteristics based on the inputs; and
control application of the laser beam from the handheld laser welding torch to the workpiece based on the adjustments.

15. The laser welding system of claim 9, wherein the input to the user interface includes dragging, highlighting, or encircling one or more displayed feature within the representation, or wherein the user interface is further configured to:
receive the input corresponding to a selection for a first laser welding profile configured for a first weld, and,
following completion of the first weld, select a second laser welding profile for a second weld.
